# EUROPÄISCHE PATENTSCHRIFT

(11) **EP 0 594 939 B1**
(45) Veröffentlichungstag und Bekanntmachung des Hinweises auf die Patenterteilung: **04.09.1996**
(21) Anmeldenummer: 93109324.9
(22) Anmeldetag: 10.06.1993
(51) Int. Cl.: A47B 13/02, F16B 12/40, A47B 17/00

(54) **Fussgestell für Tische und dergleichen**
Leg for tables or the like
Pied pour tables ou similaire

(30) Priorität: 21.10.1992 DE 4235475
(43) Veröffentlichungstag der Anmeldung: 04.05.1994
(73) Patentinhaber: VEYHL GmbH, D-75389 Neuweiler-Zwerenberg (DE)
(72) Erfinder: Veyhl, Wolf, D-75389 Neuweiler 5 (DE)
(74) Vertreter: Rüdel, Dietmar, Dipl.-Ing.

(56) Entgegenhaltungen:
- EP-A- 0 458 042
- DE-A- 3 805 592

## Beschreibung

Die Erfindung betrifft ein Fußgestell, insbesondere für Tische, mit Säulen, an denen gegebenenfalls Fußausleger vorgesehen sind und einem die Säulen verbindenden Basisträger, wobei am Basisträger Plattenträger angeordnet sind.

Ein solches Gestell ist aus der EP-A-458042 bekannt.

Gestelle für Tischplatten sind in zahlreichen Formen und aus unterschiedlichsten Materialien bekannt. Die bekannten Tischfußgestelle müssen, sofern sie aus Blech gefertigt sind, aus einem nicht nur stabilen sondern auch verwindungssteifen Profil gefertigt sein, so daß sie auch mit größeren Kräften bzw. Momenten belastet werden können. Wesentlich ist bei einem Tischfußgestell aus Blech, daß der die Säulen verbindende Träger in sich eine große Stabilität aufweist. Dies kann über ein Vollprofil erreicht werden oder die zu befestigende Tischplatte wird unmittelbar am Träger befestigt. Derartige Konstruktionen haben jedoch den Nachteil, daß sie entweder teuer sind, weil viel Material für den Träger verarbeitet werden muß, oder der Zusammenbau derart bekannter Tischgestelle mit einer Platte sehr zeitaufwendig ist. Werden die Platten unmittelbar am Träger befestigt, so sind mit demselben Träger unterschiedliche Tischkonstruktionen nicht schnell und einfach zu bewerkstelligen und für verschiedene Anforderungen müssen jeweils darauf abgestimmte Gestelle hergestellt werden.

Aufgabe der vorliegenden Erfindung ist es deshalb, die bekannten Fußgestelle derart weiterzubilden, daß sie bei bekannter Stabilität eine großtechnische Fertigung zulassen und in einer leichteren Bauweise einfacher herstellbar sind.

Diese Aufgabe wird erfindungsgemäß dadurch gelöst, daß der Basisträger aus Blech zu einem Hohlkörper mit offenem Querschnitt gefaltet ist und daß eine offene Seite und angrenzende Seitenflächen des Basisträgers vom dem Plattenträger formschlüssig umgriffen sind und daß die Säulen im Bereich des Plattenträgers am Basisträger befestigbar sind.

Ein derartiger Aufbau eines erfindungsgemäßen Fußgestells hat den wesentlichen Vorteil, daS der an sich nicht steife Basisträger mit einfachen Mitteln wesentlich stabilisiert werden kann. Der Basisträger selbst kann aus gängigem Blechplattenmaterial gefaltet werden, das nicht eine besonders dicke Materialstärke aufweisen muß. Der erfindungsgemäß gefaltete Basisträger weist leicht biegbare Schenkel schon deshalb auf, weil die Enden der Schenkel nicht stabilisiert sind und frei enden.

Der Basisträger selbst ist leicht, weil für seinen Bau Material eingespart und zudem dünnes Blechmaterial verwendet werden konnte und damit auch kostengünstiger zu fertigen. Der Basisträger in Alleinstellung ist nicht verwindungssteif.

Werden vorgefertigte Plattenträger über eine in den Plattenträgern vorgesehene Aussparung auf den Träger geschoben, so läßt sich auch bei einer schon vorgegebenen Passung von Basisträger zu Plattenträger, der Plattenträger auf dem Basisträger einfach verschieben, weil die labilen Schenkel des Basisträgers ohne wesentlichen Kraftaufwand aus ihrer Lage gedrückt werden können. Ist die vorbestimmte Endlage des Plattenträgers auf dem Basisträger erreicht und wird die Säule im Bereich des Plattenträgers am Basisträger in einer Form befestigt, die ein Zusammenwirken der Teile Basisträger, Plattenträger und Säule zuläßt, so ist der Basisträger in einem hohen Maße verwindungssteif. Auch weitere für die Lagerung von Zwischen- oder Seitenträgern notwendige Durchbrüche über die Länge des Basisträgers und/oder regelmäßig wiederkehrende Durchbrüche für die Säulen, so daß sich an mehreren Punkten des Basisträgers Säulen befestigen lassen, verringern die durch die erfindungsgemäße Anordnung von Basisträger zu Plattenträger und Säule erreichte Steifigkeit des Fußgestells nicht.

Ein weiterer Vorteil ist neben der kostengünstigen einfachen Fertigung des Basisträgers der einfache Zusammenbau zu einem gewünschten Fußgestell in unterschiedlichen Längen und Konstellationen.

Ist in einer bevorzugten Ausführungsform der Basisträger im Querschnitt trapezförmig ausgebildet und greift jede Säule mit zwei voneinander beabstandeten Rohrabschnittsenden in den Basisträger ein, und pressen die Rohrabschnittsenden die Seitenflächen des Basisträgers an Blechabschnitte des Plattenträgers, so werden auf eine einfache Art und Weise die Teile Basisträger, Plattenträger und Säule einander zugeordnet und lagestabil fixiert. Weiten sich die Seitenflächen des trapezförmigen Basisträgers zur Platte hin, die vom Plattenträger aufgenommen wird, so werden auf den Basisträger drückende Momente verringert.

Sind die Rohrabschnittsenden kegelförmig ausgebildet und wirken diese Rohrabschnittsenden auf die Seitenflächen des Basisträgers, so werden die Seitenflächen beim Einschieben der Säule in den Basisträger auseinandergedrückt und pressen sich gegen angrenzende Flächen des Plattenträgers. Je nachdem wie weit die Rohrabschnittsenden in den Basisträger hineingeschoben werden, umso stärker werden Plattenträger und Basisträger gegeneinander verspannt. Über diese Anordnung wird der Basisträger und das gesamte Fußgestell versteift.

In weiterer Ausgestaltung der Erfindung sind die Säulen zumindest abschnittsweise aus zwei voneinander beabstandeten Rohren gebildet, die über einen Laschen aufweisenden Steg miteinander verbunden sind, wobei die Laschen mit Durchbrüchen versehen sind und eine Grundplatte des Basisträgers durchsetzen und in den Innenraum des Basisträgers ragen, der Keile aufweist, die die Durchbrüche der Laschen durchgreifen.

Dies hat den Vorteil, daß die Säulen im Bereich der Plattenträger mit einfachen Mitteln und in einfachen Arbeitsgängen am Basisträger stabil, unverrückbar und schnell befestigt werden können.

Bevorzugt sind die Keile von freien Enden eines S-förmigen Schlosses gebildet, das aus einem Blechmaterial gefertigt ist und das Schloß selbst ist drehbar auf der Innenwand der Grundplatte gelagert. Mit einem derartigen Schloß können in einem Arbeitsgang zwei Keile gesetzt werden. Die gesetzten Keile verrasten in den Laschen dadurch, daß sie den Laschendurchbruch geringfügig hintergreifen. Damit ist auch sichergestellt, daß sich die Verkeilung nicht selbsttätig löst.

In einer weiteren Ausgestaltung der Erfindung ist zur Lagerung des Schlosses am Schloß selbst ein Zapfen vorgesehen, der in eine Ausnehmung der Grundplatte greift.

Dies hat den Vorteil, daß die richtige Lage und Position des Schlosses nicht gesucht werden muß, sondern durch Ausprägungen bzw. Durchbrüchen schon auf der Grundplatte des Basisträgers angedeutet ist. Gleichzeitig kann diese Ausnehmung als Drehlager für eine Drehbewegung des Schlosses dienen.

Besonders vorteilhaft ist es, wenn am Basisträger über die Länge gesehen in regelmäßigen Abständen sowohl in der Grundplatte als auch in Seitenflächen des Basisträgers Durchbrüche vorgesehen sind, die es einerseits zulassen, daR der Fußblock, bestehend aus Säule und Fußauslenker, in einem vorgegebenen Raster, bevorzugt alle 200 mm, an dem Basisträger justierbar und befestigbar ist. Besonders vorteilhaft ist es auch, wenn der Basisträger und die Durchbrüche, d.h. Ausstanzungen und Perforationen, symmetrisch ausgebildet sind. Dies ermöglicht einen vielfältigen Einsatz des Basisträgers und es muß nicht darauf geachtet werden, in welcher Drehlage der Basisträger mit angrenzenden Teilen verbaut werden muß.

Weitere Vorteile ergeben sich aus der Beschreibung und der beigefügten Zeichnung. Ebenso können die vorstehend genannten und die noch weiter aufgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter.

Die Erfindung ist in der Zeichnung dargestellt und wird anhand von Ausführungsbeispielen näher erläutert. Es zeigt:
- Fig. 1: ein erfindungsgemäßes Fußgestell in Explosionsdarstellung mit einem Basisträger, zwei Plattenträgern und zwei Säulen;
- Fig. 2: einen Abschnitt eines freien Endes eines erfindungsgemäßen Basisträgers;
- Fig. 3: einen Abschnitt eines erfindungsgemäßen Basisträgers mit aufgeschobenem Plattenträger;
- Fig. 4: einen Abschnitt eines erfindungsgemäßen Basisträgers mit aufgeschobenem Plattenträger und eingesetzter Säule, sowie einem Schloß, das keilartig Laschen, die am Steg der Säule angeordnet sind, durchgreift.

Die einzelnen Figuren der Zeichnung sind teilweise stark schematisiert und zeigen den erfindungsgemäßen Gegenstand nicht maßstäblich. Die Gegenstände der einzelnen Figuren sind so dargestellt, daß der Aufbau des erfindungsgemäßen Fußgestells gut gezeigt werden kann.

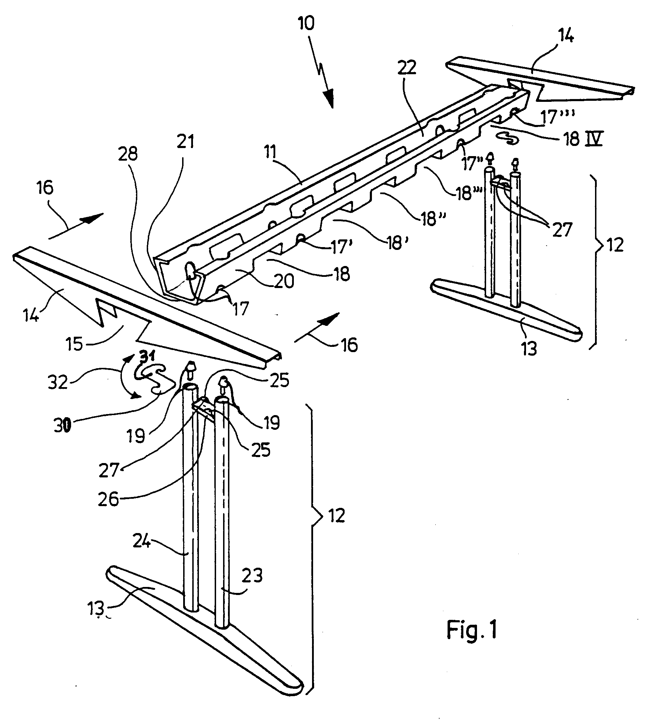

Fig. 1 zeigt ein Fußgestell 10 mit einem Basisträger 11, dem Säulen 12 zugeordnet sind. An den Säulen 12 sind Fußausleger 13 ausgebildet. Auf den Basisträger 11 sind Plattenträger 14 aufschiebbar, an denen eine Aussparung 15 ausgebildet ist, die der Außenkontur des Basisträgers 11 im Querschnitt entspricht. In Pfeilrichtung 16 kann der Plattenträger 14 auf den Basisträger 11 geschoben werden.

An dem Basisträger sind Durchbrüche 17, 17', 17'' und 17''', jeweils symmetrisch auf beiden Seiten, vorgesehen, damit der Fußblock, bestehend aus Säule und Fußausleger, am Basisträger 11, jeweils in einem bestimmten Abstand über die Länge gesehen, befestigbar ist.

Weitere Durchbrüche 18, 18', 18'', 18''', 18 IV sind für Seitenstreben, Seitenträger und/oder Zwischenträger vorgesehen, die den Basisträger 11 quer zur Längserstreckung durchdringen.

Über Rohrabschnittsenden 19 ist die Säule 12 durch die Durchbrüche 17, 17', 17'', 17''' in den Basisträger 11 einsteckbar. Die Rohrabschnittsenden 19 sind, wie in der Figur gezeigt, kegelförmig ausgebildet und kommen bei eingeschobener Säule 12 an Aussparungen 17 des Basisträgers 11 zur Anlage, wobei die Rohrabschnittsenden 19 je nachdem wie weit die Säule 12 in den Basisträger 11 eingesteckt wird, Seitenflächen 20, 21 des Basisträgers 11 nach außen gegen angrenzende Blechflächen des Plattenträgers 14 drücken. In der Figur sind die Aussparungen 17, 17', 17'', 17''' an beiden Seiten des Basisträgers 11 vorgesehen und die Bezugszeichen sind für die Aussparungen 17', 17'' und 17''' nur an einer Seite des Basisträgers 11 eingezeichnet.

Der Basisträger 11 selbst weist eine offene Seite 22 auf, die sich über die gesamte Länge des Basisträgers 11 erstreckt.

Die Säulen 12 sind in der Figur aus Rohren 23, 24 gebildet, die über einen Laschen 25 behafteten Steg 26 miteinander verbunden sind. Die Laschen 25 weisen zu den Rohrabschnittsenden 19 hin und sind mit Durchbrüchen 27 versehen. Wird eine Säule 12 in den Basisträger 11 eingesteckt, so durchdringen nicht nur die Rohrabschnittsenden 19 beispielsweise Durchbrüche 17 des Basisträgers 11, sondern auch die Laschen 25 durchdringen eine Grundplatte 28 des Basisträgers 11 und ragen in einen Innenraum 29 des als Kohlkörper ausgebildeten Basisträgers 11. Die Durchbrüche 27 sind im zusammengebauten Zustand des Fußgestells 10 von Keilen 30 durchgriffen, die an einem Schloß 31 ausgebildet sind. Dabei liegt das Schloß 31 auf der Innenseite im Hohlraum an der Grundplatte 28 an und über die in der Figur gezeigte Drehbewegung in Pfeilrichtung 32 können die Keile 30 in die Durchbrüche 27 der Laschen 25 eingedreht oder auch aus den Durchbrüchen 27 herausgedreht werden.

In der Figur sind dieselben Elemente nur teilweise mit denselben Bezugszeichen gekennzeichnet.

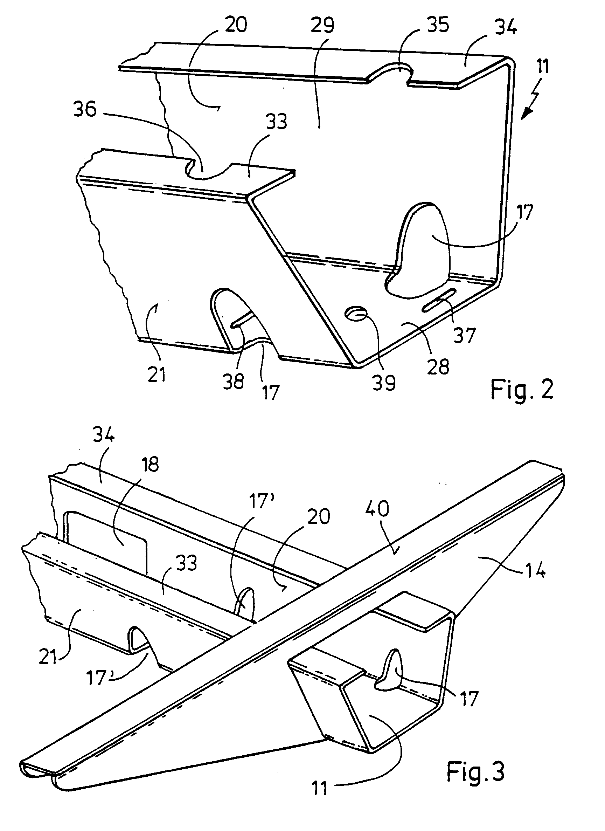

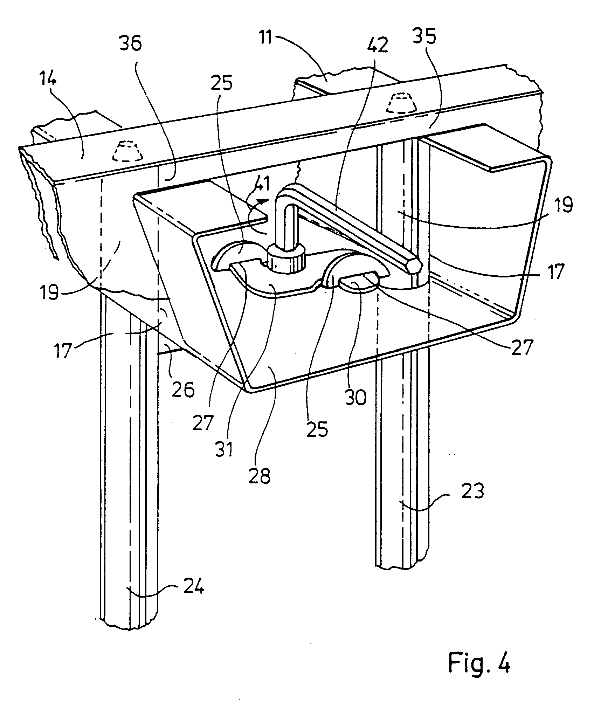

Fig. 2 zeigt einen Abschnitt des freien Endes des Basisträgers 11 in vergrößerter Darstellung gegenüber der Darstellung in Fig. 1. Der Basisträger 11 ist aus einem Blech von beispielsweise 2 bis 3 mm Materialstärke zu einem trapezförmigen Hohlkörper gefaltet, der an einer Seite offen ist. Der trapezförmige Körper wird von einer Grundplatte 28 gebildet, die die kürzere Grundlinie eines Trapezes darstellt. An die Grundplatte 28 grenzen die Seitenflächen 20, 21. An den freien Enden sind die Seitenflächen 20, 21 abgeknickt und bilden Auflagebänder 33, 34. An der Grundplatte 28 sind Durchbrüche 17 vorgesehen, in die ein nicht gezeigtes Säulenende greifen kann. Die Enden der Säulen kommen in Ausnehmungen 35, 36 zur Anlage. An der Grundplatte 28 sind noch Schlitze 37, 38 vorgesehen, die von Laschen durchstoßen sind, wenn eine Säule die Durchbrüche 17 durchdringt. Eine Ausnehmung 39 auf der Grundplatte 28 dient der Fixierung eines Schlosses. Das Schloß ist in Fig. 4 gezeigt.

Fig. 3 zeigt ein Ende des Basisträgers 11 mit einem aufgesteckten Plattenträger 14. In der Figur sind auch Durchbrüche 17, 17' für die Aufnahme einer Säule dargestellt und an dem Basisträger 11 ist ein Durchbruch 18 ausgebildet, der beispielsweise Seiten- oder Zwischenträger aufnehmen kann. Der Plattenträger 14 umgreift formschlüssig die Seitenflächen 20, 21 des Basisträgers 11 und liegt auf den Auflagebändern 33, 34 auf. Um möglichst einfach die richtige Lage des Plattenträgers 14 am Basisträger 11 vorzugeben, sind am Basisträger 11 Perforierungen vorgesehen, die eine Verrastung mit dem Plattenträger 14 bewirken. An einer Auflagefläche 40 wird eine in der Figur nicht gezeigte Platte befestigt oder lagestabil verrastet.

Fig. 4 zeigt einen Abschnitt des Basisträgers 11 und Teile des Plattenträgers 14, sowie die Rohrabschnittsenden 19 der Rohre 23, 24. Die Rohrabschnittsenden 19 sind in den Basisträger 11 eingesetzt, indem sie die Durchbrüche 17 durchdringen. Die Rohrabschnittsenden 19 grenzen an die Ausnehmungen 35, 36, die in der Figur nicht sichtbar sind. Auf der Außenseite der Grundplatte 28 liegt flächenhaft der Steg 26 an und die Laschen 25 des Steges 26 durchdringen die Grundplatte 28. Die Durchbrüche 27 der Laschen 25 sind von den Keilen 30 des Schlosses 31 durchsetzt. Die Keile 30 verkeilen und verrasten in den Durchbrüchen 27. Die Keilverbindung ist über eine Drehbewegung in entgegengesetzter Pfeilrichtung 41 mittels eines Imbus-Schlüssels 42 lösbar.

Ein Fußgestell für Tische weist somit Säulen 12 auf, die in einem Basisträger 11 gehalten sind und am Basisträger 11 sind Plattenträger 14 vorgesehen. Der Basisträger 11 ist aus Blech zu einem Hohlkörper mit offenem Querschnitt gefaltet und die Seitenflächen 20, 21 des Basisträgers 11 werden von dem Plattenträger 14 formschlüssig umgriffen. Im Bereich des Plattenträgers 14 ist die Säule 12 am Basisträger 11 befestigt.

## Patentansprüche

1. Fußgestell, insbesondere für Tische, mit Säulen (12), an denen gegebenenfalls Fußausleger (13) vorgesehen sind und einem die Säulen (12) verbindenden Basisträger (11), wobei am Basisträger (11) Plattenträger (14) angeordnet sind, dadurch gekennzeichnet, daß der Basisträger (11) aus Blech zu einem Hohlkörper mit offenem Querschnitt gefaltet ist und daß eine offene Seite (22) und angrenzende Seitenflächen (20, 21) des Basisträgers (11) von dem Plattenträger (14) formschlüssig umgriffen sind, und daß die Säulen (12) im Bereich des Plattenträgers (14) am Basisträger (11) befestigt sind.

2. Fußgestell nach Anspruch 1, dadurch gekennzeichnet, daß der Basisträger (11) im Querschnitt trapezförmig ausgebildet ist und daS jede Säule (12) mit zwei voneinander beabstandeten Rohrabschnittsenden (19) in den Basisträger (11) eingreift, und daß über die Rohrabschnittsenden (19) die Seitenflächen (20, 21) des Basisträgers (11) an Blechabschnitte des Plattenträgers 14 anpressbar sind.

3. Fußgestell nach Anspruch 2, dadurch gekennzeichnet, daß die Rohrabschnittsenden (19) kegelförmig ausgebildet sind.

4. Fußgestell nach einem der Ansprüche 1 bis 3, dadurch gekennzeichnet, daß die Säulen (12) zumindest abschnittsweise aus zwei voneinander beabstandeten Rohren (23, 24) gebildet sind, die über einen mit Laschen (25) aufweisenden Steg (26) miteinander verbunden sind, wobei die Laschen (25) mit Durchbrüchen (27) versehen sind und eine Grundplatte (28) des Basisträgers (11) durchsetzen und in den Innenraum des Basisträgers (11) ragen, der Keile (30) aufweist, die die Durchbrüche (27) der Laschen (25) durchgreifen.

5. Fußgestell nach Anspruch 4, dadurch gekennzeichnet, daß die Keile (30) von freien Enden eines S-förmigen Schlosses (31) aus einer Blechplatte gebildet sind, die drehbar auf der Innenwand der Grundplatte (28) gelagert ist.

6. Fußgestell nach Anspruch 5, dadurch gekennzeichnet, daß zur Lagerung des Schlosses (31) am Schloß (31) ein Zapfen vorgesehen ist, der in eine Ausnehmung (39) der Grundplatte (28) greift.

7. Fußgestell nach einem der Ansprüche 4 bis 6, dadurch gekennzeichnet, daß am Basisträger (11) über die Länge gesehen, in regelmäßigen Abständen sowohl in der Grundplatte (28) als auch in Seitenflächen (20, 21) des Basisträgers (11) Durchbrüche (17, 17', 17'', 17'''; 18, 18', 18'', 18''', 18 IV) vorgesehen sind.

## Claims

1. Leg, in particular for tables, having columns (12) comprising, if appropriate, foot extensions (13) and with a main support (11) connecting the columns (12), with slab supports (14) being arranged on the main support (11), characterized in that the main support (11) is made from sheet metal folded into a hollow body having an open cross section with one open side (22) and adjacent side surfaces (20, 21) of the main support (11) being lockingly surrounded by the slab support (14) and the columns (12) are attached to the main support (11) in the vicinity of the slab support (14).

2. Leg according to claim 1, characterized in that the main support (11) has a trapezoidal-shaped cross section and each column (12) engages into the main support (11) with two mutually separated pipe section ends (19), and the side surfaces (20, 21) of the main support (11) can be pressed by means of the pipe section ends (19) on sheet metal sections of the slab support (14).

3. Leg according to claim 2, characterized in that the pipe section ends (19) have a conical shape.

4. Leg according to any of the claims 1 through 3, characterized in that at least portions of the columns (12) are made from two mutually separated pipes (23, 24) which are connected to each other by means of a strut (26) having tabs (25), wherein the tabs (25) have openings (27) and penetrate through a base plate (28) of the main support (11) and project into the inner region of the main support (11) which has wedging means (30) penetrating into the openings (27) in the tabs (25).

5. Leg according to claim 4, characterized in that the wedging means (30) is formed from the free ends of a S-shaped locking means (31) made from sheet metal plate, which is rotatably mounted on the inner wall of the base plate (28).

6. Leg according to claim 5, characterized in that a pin is provided at the locking means (31) for mounting thereof which engages into an opening (39) in the base plate (28).

7. Leg according to any of the claims 4 through 6, characterized in that openings (17, 17', 17'', 17'''; 18, 18', 18'', 18''', 18 IV) are provided for on the main support (11) along its length at regular intervals as well as in the base plate (28) and in side surfaces (20, 21) of the main support (11).

## Revendications

1. Structure de pied, en particulier pour tables, comprenant des montants (12), sur lesquels sont éventuellement prévus des empattements (13), et un support de base (11) qui relie les montants (12), des supports de plateau (14) étant agencés sur le support de base (11), caractérisée en ce que le support de base (11) est plié à partir d'une tôle en un corps creux présentant une section transversale ouverte, en ce qu'un côté ouvert (22) et des surfaces latérales adjacentes (20, 21) du support de base (11) sont entourés par le support de plateau (14) de façon à former une liaison par la forme, et en ce que les montants (12) sont fixés sur le support de base (11) dans la zone du support de plateau (14).

2. Structure de pied suivant la revendication 1, caractérisé en ce que le support de base (11) est réalisé en section transversale sous une forme trapézoïdale, en ce que chaque montant (12) pénètre dans le support de base (11) par deux extrémités de tronçon tubulaire (19) espacées l'une de l'autre et en ce que, par l'intermédiaire des extrémités de tronçon tubulaire (19), les faces latérales (20, 21) du support de base (11) peuvent être pressées sur des sections du support de plateau (14).

3. Structure de pied suivant la revendication 2, caractérisée en ce que les extrémités de tronçon tubulaire (19) sont réalisées sous une forme conique.

4. Structure de pied suivant l'une des revendications 1 à 3, caractérisée en ce que les montants (12) sont formés au moins par section de deux tubes espacés l'un de l'autre (23, 24) qui sont mutuellement reliés par une entretoise (26) présentant des pattes (25), les pattes (25) étant pourvues d'ouvertures (27) et traversant une plaque de base (28) du support de base (11) en faisant saillie dans l'espace intérieur du support de base (11), qui présente des cales (30) qui passent à travers les ouvertures (27) des pattes (25).

5. Structure de pied suivant la revendication 4, caractérisée en ce que les cales (30) sont formées par des extrémités libres d'une fermeture en forme de S (31) à base d'une plaque de tôle, qui est supportée de manière à pouvoir tourner sur la paroi interne de la plaque de base (28).

6. Structure de pied suivant la revendication 5, caractérisée en ce que, pour le support de la fermeture (31), il est prévu sur la fermeture (31) un tourillon qui pénètre dans un évidement (39) de la plaque de base (28).

7. Structure de pied suivant l'une des revendications 4 à 6, caractérisée en ce que des ouvertures (17, 17', 17'', 17'''; 18, 18', 18'', 18''', 18 IV) sont prévues sur le support de base (11), vu sur la longueur, à des distances régulières aussi bien dans la plaque de base (28) que dans les faces latérales (20, 21) du support de base (11).
